# EUROPÄISCHE PATENTSCHRIFT

(11) **EP 1 754 531 B1**
(45) Veröffentlichungstag und Bekanntmachung des Hinweises auf die Patenterteilung: **26.11.2008**
(21) Anmeldenummer: 05019064.4
(22) Anmeldetag: 02.09.2005
(51) Int. Cl.: B01F 15/00, B01F 7/00

(54) **Vorrichtung zum Mischen und Aufbringen eines aus mindestens zwei Komponenten bestehenden pastösen Materials auf ein Substrat**
Device for mixing and applying doughy materials made of at least two components on a substrate
Appareil pour mélanger et appliquer un matériel pâteux à au-moins deux composants sur un substrat

(30) Priorität: 16.08.2005 DE 202005013008 U
(43) Veröffentlichungstag der Anmeldung: 21.02.2007
(73) Patentinhaber: Intec Bielenberg GmbH & Co. KG, 50169 Kerpen (DE)
(72) Erfinder: Bielenberg, Jörn, 50374 Erftstadt (DE)
(74) Vertreter: Müller-Gerbes Wagner Albiger Patentanwälte

(56) Entgegenhaltungen:
- EP-A1- 0 568 904
- EP-A2- 1 375 008
- DE-A1- 2 121 022
- DE-A1- 2 148 873
- DE-U1-3202005 005 83
- GB-A- 2 075 852
- US-A- 5 902 042
- US-B1- 6 241 852

## Beschreibung

Die Erfindung betrifft eine Vorrichtung zum Mischen und Aufbringen eines aus mindestens zwei Komponenten bestehenden pastösen Materials auf ein Substrat. Bei einem solchen aus zwei Komponenten bestehenden pastösen Material kann es sich beispielsweise um einen aus Klebstoff und Härter bestehenden zweikomponentigen Klebstoff handeln, wie er in der Automobilindustrie zur Verklebung von Teilen des Fahrzeuges verwendet wird. Derartige Vorrichtungen werden zu diesem Zweck mit entsprechenden Dosierern für die einzelnen Komponenten zusammengeschaltet und z.B. an einem Roboterarm befestigt, der sodann den Auftrag des pastösen Materials in Strangform auf dem Substrat vornimmt.

Die bekannten Vorrichtungen zum Mischen und Aufbringen des aus mindestens zwei Komponenten bestehenden pastösen Materials bestehen aus einem Mischergehäuse mit einer innerhalb desselben ausgebildeten Mischkammer, Einlasskanälen für die Einleitung der Komponenten in die Mischkammer und einer Austrittsöffnung für den Austritt des Materials aus der Mischkammer sowie einen innerhalb der Mischkammer angeordneten Mischer, der mittels einer aus dem Mischergehäuse heraus geführten Antriebswelle von einem Antriebsmotor drehbar antreibbar ist, siehe beispielsweise die GB 2 075 852 A.

Die einzelnen Komponenten werden von Dosierstationen in den gewünschten Mengen separat der Mischkammer zugeführt, in welcher sie zu dem reaktiven, das aufzubringende pastöse Material bildenden Gemisch vermengt werden. Hierbei muss der Vermischung besondere Aufmerksamkeit gewidmet werden, damit eine homogene Mischung mit den entsprechenden Materialeigenschaften ohne Ausbildung von einzelnen Schichten der einzelnen Komponenten erfolgt. Hierzu dient in erster Linie der innerhalb der Mischkammer angeordnete und mittels Antriebsmotor und Antriebswelle in Rotation versetzte Mischer, wobei aufgrund der Rotationsbewegung des Mischers auch von einem dynamischen Mischer gesprochen wird.

Bei größeren Pausen in der Zubereitung des aufzubringenden pastösen Materials, etwa bei Unterbrechungen des Schichtbetriebs in der Automobilindustrie, nach Rezepturumstellungen, bei periodisch erforderlichen Spül- oder Reinigungszyklen oder auch bei Wartungsarbeiten ist eine aufwändige Reinigung der Mischkammer und des Mischers sowie ggf. auch ein Austausch des Mischers erforderlich. Diese Reinigung bzw. der Austausch des Mischers erfolgt bei den bekannten Vorrichtungen bislang durch Zugriff auf den Mischer und die Mischkammer über die Austrittsöffnung, d.h. in gegenüber der Austrittsrichtung des pastösen Materials entgegengesetzter Richtung. Da jedoch üblicherweise die eingesetzten Mischer mittels einer Schraubverbindung an der Antriebswelle befestigt sind und auch auf die Austrittsöffnung eine Auftragsdüse aufgeschraubt ist, die für die vorgenannten Reinigungs- und Wartungszwecke abgenommen werden muss, besteht dann die Gefahr, dass die Gewinde für die Befestigung der Auftragsdüse am Mischergehäuse und/oder des Mischers an der Antriebswelle mit sich noch in der Mischkammer und/oder am Mischer befindlichem pastösen Material zusetzen bzw. von diesen verunreinigt werden, was außerordentlich unerwünscht ist, da hierdurch der nach Abschluss der Wartungs- oder Reinigungsarbeiten erforderliche Zeitaufwand für die erneute Installation aller Komponenten extrem verlängert werden kann. In der EP 1 375 008 A2 wird daher ein zusätzlicher Reinigungsanschluss für die Mischeinrichtung vorgeschlagen.

Die Erfindung hat sich die Aufgabe gestellt, eine Vorrichtung der eingangs genannten Art dahingehend weiterzubilden, dass bei erforderlichen Reinigungs-oder Wartungsarbeiten von Mischkammer bzw. Mischer eine Verschmutzung der Gewinde an der Austrittsöffnung des Mischergehäuses und/oder zwischen Mischer und Antriebswelle zuverlässig verhindert wird, die Komponenten leicht zu reinigen und auszutauschen sind und die erneute Inbetriebnahme in kürzester Zeit mit wenigen Handgriffen vorzunehmen sein soll.

Zur Lösung dieser Aufgabe wird erfindungsgemäß die Ausbildung einer Vorrichtung zum Mischen und Aufbringen eines aus mindestens zwei Komponenten bestehenden pastösen Materials auf ein Substrat gemäß den Merkmalen des Patentanspruches 1 vorgeschlagen.

Vorteilhafte Ausgestaltungen und Weiterbildungen der erfindungsgemäßen Vorrichtung sind Gegenstand der Unteransprüche.

Der erfindungsgemäße Vorschlag beruht darauf, dass der Mischer mit der Antriebswelle in axialer Richtung der Antriebswelle verschiebbar im Mischergehäuse gelagert ist.

Durch diese Ausgestaltung ist es möglich, bei Wartungs- oder Reinigungszyklen der erfindungsgemäßen Vorrichtung den Mischer mitsamt der daran befestigten Antriebswelle durch eine axiale Verschiebung derselben aus der Mischkammer heraus zu führen, so dass er leicht zugänglich ist und überdies die Gefahr von Verschmutzungen von Teilen der erfindungsgemäßen Vorrichtung durch den außerhalb der Mischkammer gelegenen Mischer gebannt ist. Darüber hinaus ist nicht nur der aus der Mischkammer axial heraus geschobene Mischer zu Reinigungs- und Wartungszwecken leicht zugänglich, sondern auch die den Mischer in Arbeitsstellung umgebenden Wände der Mischkammer sind für Reinigungs- und Wartungszwecke in dieser Position leicht zugänglich.

In einer bevorzugten Ausführungsform der erfindungsgemäßen Vorrichtung ist eine Kupplung zwischen dem Antriebsmotor und der Antriebswelle vorgesehen, mittels derer die Antriebswelle bei in der Mischkammer befindlichem Mischer an den Antriebsmotor ankuppelbar ist bzw. die Antriebswelle zur axialen Verschiebung derselben vom Antriebsmotor abkuppelbar ist. Eine solche Ausführungsform der erfindungsgemäßen Vorrichtung lässt sich von einem Bediener zu Wartungs- oder Reinigungszwecken leicht handhaben, da sie über einen stationär befestigten Antriebsmotor verfügt und zum axialen Verschieben von Antriebswelle und Mischer aus der Mischkammer lediglich die Kupplung zwischen Antriebsmotor und Antriebswelle geöffnet werden muss, so dass die Antriebswelle anschließend axial vom Antriebsmotor weg verschiebbar ist.

Umgekehrt ist es nach Abschluss der Reinigungs- oder Wartungsarbeiten möglich, durch axiale Verschiebung der Antriebswelle und des daran befindlichen Mischers in entgegengesetzter Richtung diese Antriebswelle über die Kupplung erneut mit dem Antriebsmotor zu verbinden, wobei durch entsprechende Wahl der Abmessungen der Antriebwelle sodann sichergestellt ist, dass sich der Mischer wieder innerhalb der Mischkammer befindet und der Betrieb der Vorrichtung wieder aufgenommen werden kann.

Die Kupplung kann in an sich bekannter Weise durch verschiedene Maschinenelemente hergestellt werden, wobei ein Beispiel mindestens einen lösbar in eine Bohrung eingreifenden Druckstift umfasst, der beispielsweise federbelastet ist und die Übertragung des vom Antrieb auf die Antriebswelle einwirkenden Drehmoments gewährleistet, gleichzeitig jedoch leicht abkuppelbar ist.

Anstelle einer solchen Kupplung zwischen einem fest stehenden Antrieb und der Antriebswelle käme selbstverständlich auch eine alternative Ausgestaltung in Betracht, bei welcher die Antriebswelle mitsamt des daran befestigten Antriebsmotors verschieblich in Bezug auf das Mischergehäuse gelagert ist.

In jedem Falle ist es bevorzugt, dass der Mischer und die Antriebswelle zwischen zwei Endpositionen axial verschieblich im Mischergehäuse gelagert sind, wobei in einer ersten Endposition der Mischer innerhalb der Mischkammer angeordnet ist, was dem bestimmungsgemäßen Betrieb zum Mischen und Aufbringen eines aus mindestens zwei Komponenten bestehenden pastösen Materials auf ein Substrat entspricht. In einer demgegenüber zweiten Endposition des Mischers, welche durch axiale Verschiebung aus der ersten Endposition erreichbar ist, wird der Mischer außerhalb des Mischergehäuses angeordnet.

In gleicher Weise ist durch Verschieben aus der zweiten Endposition in entgegengesetzter axialer Richtung ein Aufsuchen der vorangehend erläuterten ersten Endposition von Antriebswelle und Mischer möglich, so dass der Mischer wieder innerhalb der Mischkammer zum Liegen kommt.

Damit eine besonders einfache Wartung und Reinigung der erfindungsgemäßen Vorrichtung möglich ist und auch ein Austausch eines an einer Antriebswelle üblicherweise durch Schraubverbindung befestigten Mischers ermöglicht ist, ist bevorzugt eine Verdrehsicherung vorgesehen, mittels derer eine Drehung der Antriebswelle in ihrer zweiten Endposition, d.h. wenn sich der Mischer außerhalb des Mischergehäuses befindet, verhinderbar ist. Eine solche Verdrehsicherung kann beispielsweise durch eine unrunde Bohrung und einen entsprechend unrund ausgeführten, beispielsweise mit einem Vierkantquerschnitt versehenen Abschnitt der Antriebswelle geschaffen werden, welche bei axialer Verschiebung der Antriebswelle in Richtung der zweiten Endposition miteinander in Eingriff kommen und sodann eine weitere Rotation der Antriebswelle um ihre eigene Achse verhindern.

Zur dauerhaft leichtgängigen Lagerung der Antriebswelle und axialen Verschiebung derselben innerhalb des Mischergehäuses ist bevorzugt eine in das Mischergehäuse einsetzbare Lagerbuchse vorgesehen, in welcher die Antriebswelle axial verschieblich und drehbar gelagert ist. Innerhalb dieser Lagerbuchse können auch Abdichtungen vorgesehen sein, um einen Austritt von Komponenten oder des hieraus gebildeten pastösen Materials aus der Mischkammer in hierfür nicht vorgesehene Bereiche der Mischkammer zu verhindern.

Weitere Ausgestaltungen und Einzelheiten der erfindungsgemäßen Vorrichtung werden nachfolgend anhand der ein Ausführungsbeispiel darstellenden Zeichnungen erläutert. Es zeigen:
- Figur 1: die Seitenansicht einer erfindungsgemäßen Vorrichtung im Teilschnitt in einer ersten Endposition,
- Figur 2: die Aufsicht auf das Mischergehäuse gemäß Schnitt A-A in Figur 1 bei abgenommener Materialzuführung,
- Figur 3: die Seitenansicht der Vorrichtung gemäß Figur 1 in einer zweiten Endposition.

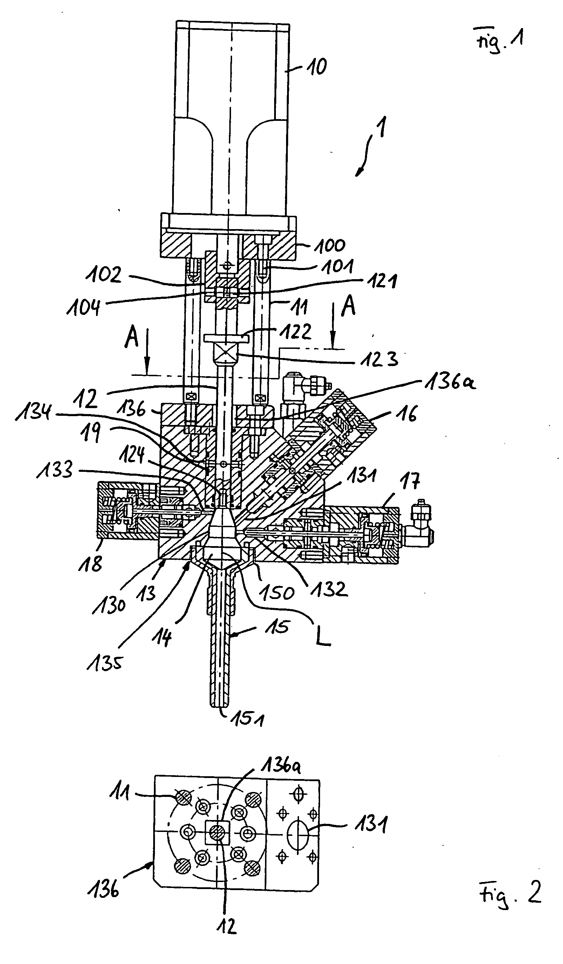

In der Figur 1 ist eine Vorrichtung zum Mischen und Aufbringen eines aus mindestens zwei Komponenten bestehenden pastösen Materials auf ein Substrat in seinen wesentlichen Bauteilen dargestellt.

Die Vorrichtung 1 dient der Zusammenführung von separat, d.h. getrennt voneinander zugeführten Komponenten, die innerhalb der Vorrichtung 1 zu einem pastösen Material, etwa einem Zwei-Komponenten-Klebstoff vermischt und sodann über eine Auftragsdüse 15 auf ein Substrat, beispielsweise ein Automobilblech aufgetragen werden.

Zu diesem Zweck umfasst die Vorrichtung 1 als zentrales Bauelement ein Mischergehäuse 13, welches in seinem Inneren mit einer Mischkammer 130 ausgebildet ist, in welche Einlasskanäle 131, 132 getrennt voneinander einmünden. Jeder Einlasskanal 131, 132 dient der Zuführung einer einzelnen Komponente, die über mit den Einlasskanälen 131 bzw. 132 kommunizierende Materialeinlässe 16, 17 mit hier nicht dargestellten Dosiervorrichtungen für die einzelnen Komponenten in Verbindung stehen.

In die Mischkammer 130 mündet ferner ein weiterer Einlasskanal 133 ein, der über einen Materialeinlass 18 bedarfsweise der Zuführung eines Spülmediums dient, um z.B. in periodischen Abständen eine Reinigung der Mischkammer 130 mittels eines über den Kanal 133 zugeführten Spülmediums zu bewirken.

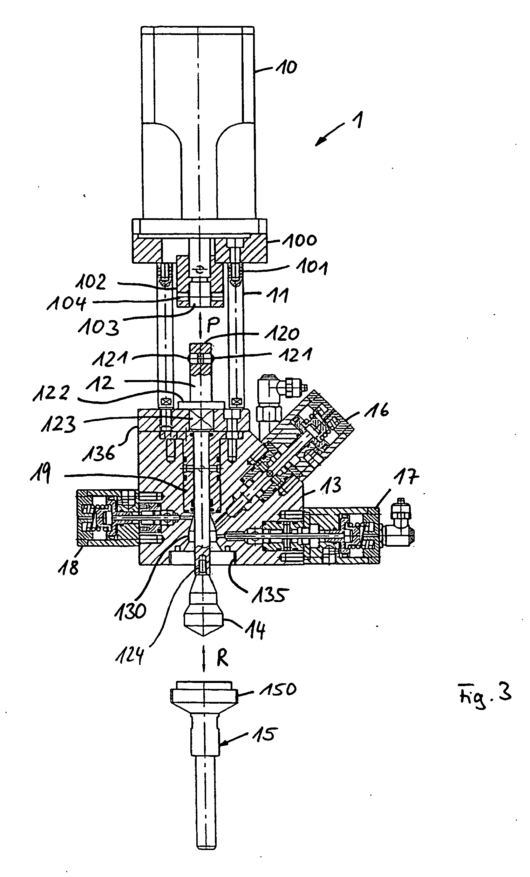

An der Unterseite der Mischkammer 130 ist eine Austrittsöffnung 135 vorgesehen, die mit einem aus der Darstellung gemäß Figur 3 besser ersichtlichen Gewinde versehen ist, in welches eine mit einem entsprechenden Schraubgewinde 150 versehene Auftragsdüse 15 einschraubbar ist. Über diese Auftragsdüse 15 und die am freien Ende ausgebildete Austragsöffnung 151 verlässt das in der Mischkammer aus den beiden getrennt zugeführten Komponenten gemischte und üblicherweise pastöse Material die Vorrichtung 1 in Richtung auf das nicht dargestellte Substrat und wird dort beispielsweise raupenförmig als Klebstoffstrang aufgetragen.

Damit innerhalb der Mischkammer 130 eine intensive, gleichmäßige und konstante Vermischung der getrennt über die Einlasskanäle 131, 132 zugeführten Komponenten erfolgt, ist darüber hinaus innerhalb der Mischkammer 130 ein dynamischer Mischer 14 vorgesehen, der eine aus den Figuren nicht näher dargestellte Oberflächenprofilierung aufweist und über eine aus dem Mischergehäuse 13 heraus geführte Antriebswelle 12 mit einem Antriebsmotor 10 verbunden ist, um den Mischer 14 innerhalb der Mischkammer 130 in eine Rotation um die Längsachse L zu versetzen. Infolge dieser Rotation des Mischers 14 um seine Achse L werden die über die Einlasskanäle 131, 132 zugeführten Komponenten an der Oberfläche des rotierenden Mischers 14 und den dort aufgrund der nicht eingezeichneten Oberflächenprofilierung vorhandenen Erhebungen und Vertiefungen mitgenommen und innerhalb der Mischkammer intensiv zu einem gewünschten pastösen Material vermischt, welches sodann die Vorrichtung 1 über die Austragsöffnung 151 der Auftragsdüse 15 verlässt.

Zur Schaffung einer kompakten, stabilen und beispielsweise auch an einem Roboterarm zum automatisierten Auftragen befestigbaren Anordnung ist der Antriebsmotor 10 über einen zugeordneten Befestigungsflansch 100 und Schrauben 101 mit Distanzstangen 11 verbunden, welche ihrerseits in eine am Mischergehäuse 13 befestigte Montageplatte 136 eingeschraubt sind, so dass der Antriebsmotor 10 vom Mischergehäuse 13 beabstandet an diesem befestigt ist.

Die drehbare Lagerung der Antriebswelle 12 innerhalb des Mischergehäuses 13 wird von einer in eine entsprechende Bohrung des Mischergehäuses 13 eingesetzten Lagerbuchse 19 bewirkt, die ihrerseits die Antriebswelle 12 unter Ausbildung eines Drehlagers aufnimmt. Die Lagerbuchse 19 ist überdies in nicht näher bezeichneter Weise mit einer Vielzahl von Dichtungen versehen, um einen unerwünschten Austritt von Material aus der Mischkammer 130 über die Fugen zwischen Lagerbuchse 19 und Mischkammer 130 bzw. Lagerbuchse 19 und darin drehbar gelagerter Antriebswelle 12 zu verhindern.

Während des Betriebs einer derartigen Vorrichtung ist es von Zeit zu Zeit notwendig, eine Reinigung des Mischers 14 und der Mischkammer 130 vorzunehmen, etwa wenn diese Vorrichtung 1 wegen Unterbrechung ihres Betriebs über einen bestimmten Zeitraum stillgestanden hat und das sich innerhalb der Mischkammer 130 bildende Material aus den einzelnen zugeführten Komponenten ausgehärtet ist oder aber falls im Zuge einer Produktumstellung der Austausch des Mischers 14 z.B. gegen einen anderen Mischer geänderter Oberflächengestaltung erforderlich wird.

Für diese Reinigungs- und/oder Wartungsarbeiten wird, wie aus der Figur 3 ersichtlich, in einem ersten Schritt nach Unterbrechung der Zufuhr der einzelnen Komponenten über die Materialeinlässe 16, 17 die Auftragsdüse 15 mit ihrem Schraubgewinde 150 aus der Austrittsöffnung 135 der Mischkammer 13 gemäß Pfeil R herausgeschraubt und abgenommen. Eventuell noch innerhalb der Auftragsdüse 15 vorhandenes Material kann nunmehr in einem separaten Arbeitsgang leicht entfernt werden.

Zur Reinigung des Mischers und der Mischkammer ist zwischen dem Antriebsmotor 10 und dem dem Mischer 14 abgewandten freien Ende 120 der Antriebswelle 12 eine Kupplung 102 vorgesehen, die von einer Querbohrung 104 gebildet wird, in welche sich quer zur Längsachse der Antriebswelle 12 erstreckende und in der Antriebswelle 12 gehalterte Druckstifte 121, die z.B. federbelastet sein können, eingreifen, wenn gemäß Figur 1 der Betrieb der Vorrichtung 1 erfolgen soll und demgemäß das Drehmoment vom Antriebsmotor 10 auf die Antriebswelle 12 übertragen werden soll.

Für die in der Figur 3 dargestellte Reinigung bzw. Wartung des Mischers 14 und der Mischkammer 130 wird die aus der Figur 1 ersichtliche geschlossene Stellung der Kupplung 102, in welcher eine Drehmomentübertragung möglich ist, aufgehoben, indem die Antriebswelle 12 in Pfeilrichtung P aus der Aufnahmebohrung 103 der Kupplung 102 herausgezogen wird, so dass die Druckstifte 121 außer Eingriff mit der Querbohrung 104 kommen und die Antriebswelle 12 und der Antriebsmotor 10 voneinander getrennt werden.

Diese Bewegung der Antriebswelle 12 in Pfeilrichtung P zum Abkuppeln vom Antriebsmotor 10 ist möglich, da die Antriebswelle 12 innerhalb der Lagerbuchse 19 axial verschieblich gelagert ist, so dass auch der an der Antriebswelle 12 in einem stirnseitigen Schraubgewinde 124 befestigte Mischer 14 in gleicher Richtung axial verschieblich ist.

Bei einer derartigen axialen Verschiebung der Antriebswelle 12, bei der diese außer Eingriff mit der Kupplung 102 des Antriebsmotors 10 kommt, wird demgemäß der Mischer 14 in gleicher Weise axial aus der Mischkammer 130 über die Austrittsöffnung 135 aus dem Mischergehäuse 13 heraus geschoben, so dass er in der in der Figur 3 ersichtlichen Position außerhalb des Mischergehäuses 13 frei zugänglich und insbesondere leicht zu reinigen ist. Darüber hinaus kann der Mischer 14 bei Bedarf problemlos von der Antriebswelle 12 und deren Gewindebohrung 124 abgeschraubt und gegen einen weiteren Mischer 14 ausgetauscht werden.

Gleichzeitig ist durch das Herausschieben des Mischers 14 aus der Mischkammer 130 diese Mischkammer ebenfalls über die Austrittsöffnung 135 problemlos zu Reinigungs- und Wartungszwecken zugänglich.

Wesentlicher Vorteil dieser Ausgestaltung ist es, dass eventuell am Mischer 14 und/oder den Wandungen der Mischkammer 130 anhaftendes Material nicht in das Schraubgewinde 135 zur Aufnahme der Auftragsdüse 15 gelangen kann und auch beim Abnehmen des frei zugänglichen Mischers 14 von der Antriebswelle 12 das hierzu dienende Schraubgewinde 124 am Ende der Antriebswelle 12 vor Verschmutzung durch anhaftendes Material bestmöglich geschützt ist. Sollte dennoch eine geringe Restmenge an Material in eines der genannten Gewinde gelangen, kann dieses aufgrund der freien Zugänglichkeit problemlos und schnell entfernt werden.

Aus der vergleichenden Betrachtung der Darstellung gemäß Figuren 1 und 3 ist ersichtlich, dass der axiale Verschiebeweg der Antriebswelle 12 und des daran befestigten Mischers 14 in beiden Verschieberichtungen gemäß Pfeil P von zwei Endpositionen begrenzt ist, nämlich einer ersten, aus der Figur 1 ersichtlichen Endposition, in welcher der Mischer 14 innerhalb der Mischkammer 130 zum Liegen kommt und das gegenüberliegende freie Ende 120 der Antriebswelle vollständig in der zugehörigen Aufnahmebohrung 103 der Kupplung 102 aufgenommen ist und die Druckstifte 121 in die Querbohrung 104 eingreifen.

In der entgegengesetzten Endposition, welche aus der Figur 3 ersichtlich ist, in welcher der Mischer 14 außerhalb des Mischergehäuses 13 zum Liegen kommt, wird eine weitere Verschiebung durch einen Radialbund 122 der Antriebswelle 12 verhindert, die in dieser Endposition auf der Montageplatte 136 des Mischergehäuses 13 aufliegt.

Um überdies eine ohne weiteres Werkzeug mit einfachen Handgriffen bewerkstelligbare Reinigung und ggf. auch Austausch des Mischers 14 zu gewährleisten, beinhaltet die Montageplatte 136 in ihrem zentralen, dem Durchtritt der Antriebswelle 12 dienenden Bereich eine beispielsweise mit einem quadratischen Querschnitt ausgebildete, z.B. durch Erodieren hergestellte Bohrung 136a und die Antriebswelle 12 ist mit einem hierzu korrespondierenden Vierkantprofilabschnitt 123 unterhalb des Radialbundes 122 ausgebildet. Sobald die Antriebswelle 12 gemäß Figur 3 in ihre untere Endposition verschoben wird, in welcher der Mischer 14 außerhalb des Mischergehäuses 13 zum Liegen kommt, greift der Vierkantabschnitt 123 der Antriebswelle 12 formschlüssig in die entsprechende mit quadratischem Querschnitt ausgestattete Durchgangsbohrung 136a der Montageplatte 136 ein und dient als Verdrehsicherung, da in dieser Position eine weitere Rotation der Antriebswelle 12 um ihre Längsachse nicht möglich ist. Aus der solchermaßen festgesetzten und an weiterer Rotation gehinderten Antriebswelle 12 kann sodann der Mischer 14 auf einfache Weise aus der entsprechenden Gewindebohrung 124 heraus geschraubt werden und bei Bedarf durch einen neuen Mischer 14 ersetzt werden.

Sobald die Antriebswelle 12 nach Abschluss der Wartungs- bzw. Reinigungsarbeiten wieder in ihre erste Endposition gemäß Figur 1 angehoben und an den Antriebsmotor 10 angekuppelt worden ist, ist auch der Vierkantabschnitt 123 wieder außer Eingriff mit der Bohrung 136a und die vorangehend geschilderte Verdrehsicherung ist aufgehoben.

Durch die vorangehend erläuterte axial verschiebbare Lagerung der Antriebswelle 12 und des daran befestigten Mischers 14 ist somit eine einfache und innerhalb kürzester Zeit bewerkstelligbare Wartung bzw. Reinigung der Vorrichtung 1 möglich, die mit wenigen Handgriffen durchgeführt werden kann, größtmögliche Sicherheit vor unerwünschter Verschmutzung gewährleistet und von daher ohne Risiko auch in kurzen Produktionsunterbrechungen vorgenommen werden kann.

## Patentansprüche

1. Vorrichtung zum Mischen und Aufbringen eines aus mindestens zwei Komponenten bestehenden pastösen Materials auf ein Substrat, umfassend ein Mischergehäuse (13) mit einer innerhalb desselben ausgebildeten Mischkammer (130), Einlasskanälen (131, 132) für die Einleitung der Komponenten in die Mischkammer (130) und einer Austrittsöffnung (135) für den Austritt des Materials aus der Mischkammer (130) sowie einen innerhalb der Mischkammer (130) angeordneten Mischer (14), der mittels einer aus dem Mischergehäuse (13) heraus geführten Antriebswelle (12) von einem Antriebsmotor (10) drehbar antreibbar ist, **dadurch gekennzeichnet, dass** der Mischer (14) mit der Antriebswelle (12) in axialer Richtung der Antriebswelle (12) zwischen zwei Endpositionen axial verschieblich im Mischergehäuse (13) gelagert sind, wobei in einer ersten Endposition der Mischer (14) innerhalb der Mischkammer (130) angeordnet und in einer zweiten Endposition der Mischer (14) und die Antriebswelle (12) zumindest teilweise durch die Austrittsöffnung (135) aus der Mischkammer (130) heraustreten.

2. Vorrichtung nach Anspruch 1, **dadurch gekennzeichnet, dass** eine Kupplung (102) zwischen dem Antriebsmotor (10) und der Antriebswelle (12) vorgesehen ist, mittels derer die Antriebswelle (12) bei in der Mischkammer befindlichem Mischer (14) an den Antriebsmotor (10) ankuppelbar ist bzw. die Antriebswelle (12) zur axialen Verschiebung derselben vom Antriebsmotor (10) abkuppelbar ist.

3. Vorrichtung nach Anspruch 2, **dadurch gekennzeichnet, dass** die Kupplung (102) mindestens einen lösbar in eine Bohrung (104) eingreifenden Druckstift (121) umfasst.

4. Vorrichtung nach einem der Ansprüche 1 bis 3, **dadurch gekennzeichnet, dass** eine Verdrehsicherung vorgesehen ist, mittels derer eine Drehung der Antriebswelle (12) in ihrer zweiten Endposition verhinderbar ist.

5. Vorrichtung nach einem der Ansprüche 1 bis 4, **dadurch gekennzeichnet, dass** der Mischer (14) mit dem ihm zugewandten Ende der Antriebswelle (12) verschraubbar ist.

6. Vorrichtung nach einem der Ansprüche 1 bis 5, **dadurch gekennzeichnet, dass** die Antriebswelle (12) in einer in das Mischergehäuse (13) eingesetzten Lagerbuchse (19) axial verschieblich und drehbar gelagert ist.

7. Vorrichtung nach einem der Ansprüche 1 bis 6, **dadurch gekennzeichnet, dass** der Antriebsmotor (10) mittels Distanzstangen (11) von dem Mischergehäuse (13) beabstandet an diesem befestigt ist.

8. Vorrichtung nach einem der Ansprüche 1 bis 7, **dadurch gekennzeichnet, dass** das Mischergehäuse (13) einen mit der Mischkammer (130) kommunizierenden Einlasskanal (133) für ein Spülmedium aufweist.

9. Vorrichtung nach einem der Ansprüche 1 bis 8, **dadurch gekennzeichnet, dass** eine mit der Austrittsöffnung (135) lösbar verbindbare Auftragsdüse (15) für das pastöse Material vorgesehen ist.

## Claims

1. Device for mixing and applying a pasty material consisting of at least two components to a substrate, comprising a mixer housing (13) with a mixing chamber (130) configured therein, inlet channels (131, 132) for the introduction of the components into the mixing chamber (130) and a discharge opening (135) for the discharge of the material from the mixing chamber (130) as well as a mixer (14) which is arranged inside the mixing chamber (130) and can be rotatably driven by a drive motor (10) by means of a drive shaft (12) guided out of the mixer housing (13), **characterised in that** the mixer (14) with the drive shaft (12) is mounted for axial displacement in the axial direction of the drive shaft (12) between two end positions in the mixer housing (13), wherein, in a first end position, the mixer (14) is arranged inside the mixing chamber (130) and, in a second end position, the mixer (14) and the drive shaft (12) emerge at least partially through the discharge opening (135) out of the mixing chamber.

2. Device according to claim 1, **characterised in that** a coupling (102) is provided between the drive motor (10) and the drive shaft (12), by means of which coupling the drive shaft (12) can be coupled to the drive motor (10) when the mixer (14) is located in the mixing chamber, or the drive shaft (12) can be decoupled from the drive motor (10) for the axial displacement of said drive shaft.

3. Device according to claim 2, **characterised in that** the coupling (102) comprises at least one pressure pin (121) releasably engaging in a bore (104).

4. Device according to any one of the preceding claims 1 to 3, **characterised in that** an anti-torsion device is provided, by means of which a rotation of the drive shaft (12) in its end position can be prevented.

5. Device according to any one of claims 1 to 4, **characterised in that** the mixer (14) can be screwed to the end of the drive shaft (12) which faces it.

6. Device according to any on of claims 1 to 5, **characterised in that** the drive shaft (12) is axially displaceably and rotatably mounted in a bearing bush (19) inserted in the mixer housing (13).

7. Device according to any one of claims 1 to 6, **characterised in that** the drive motor (10) is fixed to the mixer housing (13), spaced apart therefrom by means of spacer rods (11).

8. Device according to any one of claims 1 to 7, **characterised in that** the mixer housing (13) has an inlet channel (133) communicating with the mixing chamber (130) for a rinsing medium.

9. Device according to any one of claims 1 to 8, **characterised in that** an application nozzle (15) which can be releasably connected to the discharge opening (135) is provided for the pasty material.

## Revendications

1. Dispositif pour mélanger et appliquer un matériau pâteux constitué d'au moins deux composants sur un substrat, comprenant un bâti de mélangeur (13) avec une chambre de mélange (130) formée à l'intérieur de celui-ci, des canaux d'entrée (131, 132) pour l'introduction des composants dans la chambre de mélange (130) et une ouverture de sortie (135) pour la sortie du matériau de la chambre de mélange (130) ainsi qu'un mélangeur (14) qui est disposé à l'intérieur de la chambre de mélange (130) et qui peut être entraîné en rotation par un moteur d'entraînement (10) au moyen d'un arbre d'entraînement (12) guidé hors du bâti de mélangeur (13), **caractérisé en ce que** le mélangeur (14) avec l'arbre d'entraînement (12) sont montés dans le bâti de mélangeur (13) de manière à être axialement déplaçable entre deux positions extrêmes dans la direction axiale de l'arbre d'entraînement (12), le mélangeur (14) étant disposé à l'intérieur de la chambre de mélange (130) dans la première position extrême et le mélangeur (14) et l'arbre d'entraînement (12) sortant au moins en partie par l'ouverture de sortie (135) de la chambre de mélange (130) dans la deuxième position extrême.

2. Dispositif selon la revendication 1, **caractérisé en ce qu'**un accouplement (102) est prévu entre le moteur d'entraînement (10) et l'arbre d'entraînement (12) au moyen duquel l'arbre d'entraînement (12) peut être accouplé au moteur d'entraînement (10) lorsque le mélangeur (14) se trouve dans la chambre de mélange ou encore l'arbre d'entraînement (12) peut, pour son déplacement axial, être découplé du moteur d'entraînement (10).

3. Dispositif selon la revendication 2, **caractérisé en ce que** l'accouplement (102) comprend au moins une tige de pression (121) s'engageant de manière amovible dans un alésage (104).

4. Dispositif selon l'une des revendications 1 à 3, **caractérisé en ce qu'**il est prévu un blocage en rotation qui permet d'empêcher une rotation de l'arbre d'entraînement (12) dans sa deuxième position extrême.

5. Dispositif selon l'une des revendications 1 à 4, **caractérisé en ce que** le mélangeur (14) peut être vissé à l'extrémité de l'arbre d'entraînement (12) orientée vers lui.

6. Dispositif selon l'une des revendications 1 à 5, **caractérisé en ce que** l'arbre d'entraînement (12) est monté de manière coulissante et à rotation dans un coussinet (19) placé dans le bâti de mélangeur (13).

7. Dispositif selon l'une des revendications 1 à 6, **caractérisé en ce que** le moteur d'entraînement (10) est fixé au moyen de tiges d'écartement (11) au bâti de mélangeur (13) à distance de celui-ci.

8. Dispositif selon l'une des revendications 1 à 7, **caractérisé en ce que** le bâti de mélangeur (13) présente un canal d'entrée (133) pour un fluide de rinçage, lequel canal communique avec la chambre de mélange (130).

9. Dispositif selon l'une des revendications 1 à 8, **caractérisé en ce qu'**il est prévu une buse applicatrice (15) pour le matériau pâteux qui peut être reliée de manière amovible à l'ouverture de sortie (135).
